(19) Europäisches Patentamt
European Patent Office
Office européen des brevets

(11) **EP 3 353 023 B1**

(12) **EUROPÄISCHE PATENTSCHRIFT**

(45) Veröffentlichungstag und Bekanntmachung des Hinweises auf die Patenterteilung:
**17.03.2021   Patentblatt 2021/11**

(21) Anmeldenummer: **16760717.5**

(22) Anmeldetag: **06.09.2016**

(51) Int Cl.:
**B60T 8/1766** (2006.01)    **B60T 8/18** (2006.01)

(86) Internationale Anmeldenummer:
**PCT/EP2016/070906**

(87) Internationale Veröffentlichungsnummer:
**WO 2017/050554 (30.03.2017 Gazette 2017/13)**

(54) **VERFAHREN ZUM BETREIBEN EINES GESPANNS**

METHOD FOR OPERATING A TRACTOR-TRAILER UNIT

PROCÉDÉ SERVANT À FAIRE FONCTIONNER UN ATTELAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.09.2015   DE 102015115851**

(43) Veröffentlichungstag der Anmeldung:
**01.08.2018   Patentblatt 2018/31**

(73) Patentinhaber: **KNORR-BREMSE Systeme für Nutzfahrzeuge GmbH
80809 München (DE)**

(72) Erfinder:
• **SKRABAK, Attila
1224 Budapest (HU)**
• **SÖNFELD, Jozsef
1037 Budapest (HU)**
• **SIMON, Laszlo
1116 Budapest (HU)**
• **JUHASZ, György
1115 Budapest (HU)**
• **BOZSVARI, Gabor
1119 Budapest (HU)**
• **SZALAY, Zsolt
1117 Budapest (HU)**
• **CSERHALMI, György
1125 Budapest (HU)**
• **BAKSA, Istvan
8792 Zalaveg (HU)**

(56) Entgegenhaltungen:
EP-A1- 0 374 484        DE-A1- 10 328 028
DE-A1-102006 033 351    DE-A1-102008 022 026
DE-B3-102011 017 018

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung geht aus von einer Vorrichtung oder einem Verfahren nach Gattung der unabhängigen Ansprüche. Gegenstand der vorliegenden Erfindung ist auch ein Computerprogramm.

Bei einem Gespann ist eine Bremskraftverteilung zwischen einzelnen Achsen des Gespanns erforderlich. Dazu ist eine Achslastinformation erforderlich. Die Achslastinformation kann von Achslastsensoren an den einzelnen Achsen gemessen werden.

Die Druckschrift DE 10 2008 022026 A1 offenbart ein EBS-System für Deichselanhänger.

Die Druckschrift DE 103 28 028 A1 offenbart ein Verfahren zur Bestimmung von Bremsenkennwerten und Bremssteuerung.

Die Druckschrift DE 10 2011 017018 B3 offenbart ein Verfahren zur lastabhängigen Bremsdruckregelung.

Die Druckschrift DE 10 2006 033351 A1 offenbart ein Verfahren zur Bestimmung eines Bremsdruckes.

Die Druckschrift EP 0 374 484 A1 offenbart ein Verfahren und Einrichtung zum Abstimmen der Bremswirkung.

Vor diesem Hintergrund werden mit dem hier vorgestellten Ansatz ein Verfahren zum Betreiben eines Gespanns aus einem Zugfahrzeug und einem gezogenen Fahrzeug, weiterhin ein Steuergerät, das dieses Verfahren verwendet, sowie schließlich ein entsprechendes Computerprogramm gemäß den Hauptansprüchen vorgestellt. Durch die in den abhängigen Ansprüchen aufgeführten Maßnahmen sind vorteilhafte Weiterbildungen und Verbesserungen der im unabhängigen Anspruch angegebenen Vorrichtung möglich.

Bei einem Gespann ohne Achslastsensoren ist ebenfalls eine Information über Achslasten an bestimmten Achsen des Gespanns erforderlich, um Bremsdrücke an diesen Achsen korrekt einstellen zu können. Diese Information kann unter Verwendung eines Fahrzeugmodells gewonnen werden. Das Fahrzeugmodell verarbeitet dazu vorhandene Eingangsgrößen und schätzt daraus die Information.

Es wird ein Verfahren zum Betreiben eines Gespanns aus einem Zugfahrzeug und einem gezogenen Fahrzeug vorgestellt, wobei das Verfahren die folgenden Schritte aufweist:

Einlesen von Eingangsgrößen von dem Zugfahrzeug und dem gezogenen Fahrzeug, wobei die Eingangsgrößen eine Zuladungsinformation über eine Zuladung des Gespanns, eine Drehmomentinformation über ein Drehmoment an einem Antriebsstrang des Zugfahrzeugs, eine Bremsdruckinformation über im Gespann bereitgestellte Bremsdrücke und eine Steigungswinkelinformation über einen Steigungswinkel einer Fahrbahn unter dem Gespann umfassen;

Bestimmen von Ausgangsgrößen unter Verwendung der Eingangsgrößen und einer Verarbeitungsvorschrift, wobei die Ausgangsgrößen eine Vorderachslastinformation über eine Achslast auf eine Vorderachse des Zugfahrzeugs und eine Hinterachslastinformation über eine Achslast auf eine Hinterachse des Zugfahrzeugs umfassen; und

Verwenden der Ausgangsgrößen zum Ansteuern einer Bremsanlage des Gespanns, um das Gespann zu betreiben.

Unter einem Gespann kann ein Lastzug oder ein Sattelzug verstanden werden. Das Zugfahrzeug beziehungsweise das ziehende Fahrzeug kann ein Lastkraftwagen oder eine Sattelzugmaschine sein. Das gezogene Fahrzeug kann ein, über eine Deichsel gezogener Anhänger oder ein Sattelauflieger sein. Der Antriebsstrang umfasst den Motor des Zugfahrzeugs, das Getriebe und die Wellen zu den angetriebenen Rädern des Zugfahrzeugs. Die Bremsdruckinformation kann Sollwerte für die im Fall einer Bremsung bereitzustellenden Bremsdrücke repräsentieren. Ebenso kann die Bremsdruckinformation tatsächlich zurückliegend bereitgestellte Bremsdrücke repräsentieren. Der Steigungswinkel repräsentiert entweder eine Steigung oder ein Gefälle.

Als Zuladungsinformation können eine Zugfahrzeugzuladungsinformation über eine Zuladung des Zugfahrzeugs und eine Anhängerzuladungsinformation über eine Zuladung eines Anhängers als gezogenes Fahrzeug oder eine Sattelaufliegerzuladungsinformation über eine Zuladung eines Sattelaufliegers als gezogenes Fahrzeug eingelesen werden.

Als Bremsdruckinformation können eine Vorderachsenbremsdruckinformation über einen Bremsdruck an der Vorderachse, eine Hinterachsenbremsdruckinformation über einen Bremsdruck an der Hinterachse und eine Anhängerbremsdruckinformation über einen Bremsdruck am gezogenen Fahrzeug eingelesen werden.

Die Ausgangsgrößen können ferner unter Verwendung einer Hubachseninformation über einen Status von Hubachsen des Gespanns bestimmt werden.

Die Ausgangsgrößen können ferner unter Verwendung einer Rollwiderstandsinformation über einen Rollwiderstand des Gespanns bestimmt werden.

Die Ausgangsgrößen können ferner unter Verwendung einer Windwiderstandsinformation über einen Windwiderstand des Gespanns bestimmt werden.

Die Ausgangsgrößen können ferner unter Verwendung einer Geschwindigkeitsinformation über eine Geschwindigkeit des Gespanns bestimmt werden.

Im Schritt des Einlesens können ferner Radgeschwindigkeitsinformationen über Drehgeschwindigkeiten von Rädern des Gespanns eingelesen werden. Das Verfahren kann einen Schritt des Ermittelns aufweisen, in dem die Geschwindigkeitsinformation unter Verwendung der Radgeschwindigkeitsinformationen ermittelt wird.

Der hier vorgestellte Ansatz schafft ferner ein Steuergerät, das ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form eines Steuergeräts kann die der Erfindung zugrunde liegende Aufgabe schnell und effizient gelöst werden.

Unter einem Steuergerät kann vorliegend ein elektrisches Gerät verstanden werden, das Sensorsignale verarbeitet und in Abhängigkeit davon Steuer- und/oder Datensignale ausgibt. Das Steuergerät kann eine Schnittstelle aufweisen, die hard-und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Fig. 1    eine Darstellung eines Lastzugs mit einem Steuergerät gemäß einem Ausführungsbeispiel;
Fig. 2    eine Darstellung eines Sattelzugs mit einem Steuergerät gemäß einem Ausführungsbeispiel;
Fig. 3    ein Blockschaltbild eines Steuergeräts gemäß einem Ausführungsbeispiel;
Fig. 4    eine Darstellung eines Zugfahrzeugs gemäß einem Ausführungsbeispiel;
Fig. 5    eine Darstellung eines Zusammenhangs zwischen einer Zuladung und einer Schwerpunktposition gemäß einem Ausführungsbeispiel;
Fig. 6    eine Darstellung eines Zusammenhangs zwischen einem Bremsdruck und einer Bremskraft gemäß einem Ausführungsbeispiel;
Fig. 7    ein Blockschaltbild eines Systems zum Betreiben eines Lastzugs gemäß einem Ausführungsbeispiel;
Fig. 8    eine Darstellung von Parametern an einem Rad gemäß einem Ausführungsbeispiel; und
Fig. 9    ein Ablaufdiagramm eines Verfahrens zum Betreiben eines Gespanns gemäß einem Ausführungsbeispiel.

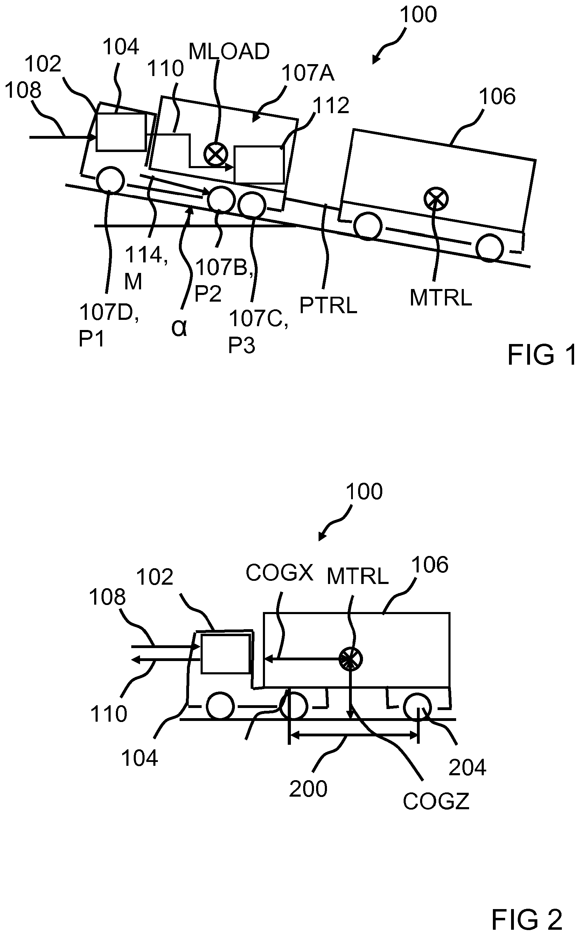

**Fig. 1** zeigt eine Darstellung eines Gespanns 100 mit einem Steuergerät 102 gemäß einem Ausführungsbeispiel. Das Gespann 100 ist ein Lastzug 100 aus einem Zugfahrzeug 104 beziehungsweise ziehenden Fahrzeug 104 und einem Anhänger 106 beziehungsweise gezogenen Fahrzeug 106. Das Steuergerät 102 kann auch als Modul 102 bezeichnet werden. Das Steuergerät 102 ist ein Bestandteil eines elektronischen Bremssystems des Lastzugs 100. Das Zugfahrzeug 104 ist ein Lastkraftwagen 104 beziehungsweise LKW 104 und weist eine Ladefläche 107a zum Transportieren eines Teils der Ladung des Lastzugs auf. Der Rest der Ladung wird auf dem Anhänger 106 transportiert. Das Zugfahrzeug 104 weist eine angetriebene Hinterachse 107b, eine nicht angetriebene Hinterachse 107c sowie eine gelenkte Vorderachse 107d auf. Die nicht angetriebene Hinterachse 107c ist hier eine Hubachse 107c. Der Anhänger 106 weist eine gelenkte Vorderachse und eine starre Hinterachse auf. Die Vorderachse ist über eine Deichsel mit einer Anhängerkupplung des Zugfahrzeugs 104 verbunden.

Das Steuergerät 102 verarbeitet Eingangsgrößen 108 zu Ausgangsgrößen 110. Die Eingangsgrößen 108 werden an dem Lastzug 100 erfasst. Die Ausgangsgrößen 110 werden verwendet, um eine Bremsanlage 112 des Lastzugs 100 anzusteuern.

Die Eingangsgrößen 108 umfassen hier eine Zuladungsinformation, über eine Zuladung des Lastzugs 100, eine Drehmomentinformation über ein Drehmoment M an einem Antriebsstrang 114 des Zugfahrzeugs 104, eine Bremsdruckinformation über im Lastzug 100 bereitgestellte Bremsdrücke $P_1$, $P_2$, $P_3$, $P_{trl}$ und eine Steigungswinkelinformation über einen Steigungswinkel $\alpha$ einer Fahrbahn 116 unter dem Lastzug 100. Die Zuladung setzt sich hier aus einer Masse $m_{load}$ auf der Ladefläche und einer Masse $m_{trailer}$ auf dem Anhänger 106 zusammen. Der erste Bremsdruck $P_1$ wird an der Vorderachse des LKW 104 erfasst, der zweite Bremsdruck $P_2$ wird an der angetriebenen Hinterachse erfasst, der dritte Bremsdruck $P_3$ wird an der nicht angetriebenen Hinterachse des LKW 104 erfasst und der Anhängerbremsdruck $P_{trl}$ wird an einer Schnittstelle zum Anhänger 106 erfasst.

Mit anderen Worten zeigt Fig. 1 eine Darstellung eines zweidimensionalen Fahrzeugmodells. Das Fahrzeugmodell ist zur Verwendung in Fahrzeugen ohne Achslastsensor vorgesehen. Durch das Fahrzeugmodell wird eine gegebene Beladung zwischen den Achsen eines Zugfahrzeugs 104 verteilt. Auf diese Weise können die Achslastsensoren durch geschätzte Lastwerte substituiert werden. Die Beladung $m_{load}$, $m_{trailer}$ wird durch die bremsschlupfbasierte Achslastschätzung, die antriebsschlupfbasierte Achslastschätzung und die gesamtmassenbasierte Achslastschätzung geschätzt.

Das Fahrzeugmodell kann bei der Auslieferung des Fahrzeugs 104 konfiguriert werden. Dabei kann das Fahrzeugmodell in einen achslastbasierten Zustand versetzt werden, bei den das Fahrzeugmodell und die Achslastschätzung deaktiviert sind. Ebenso kann das Modell in einem Modus für festgelegte Achslasten versetzt werden. Auch dabei sind das Fahrzeugmodell und die Achslastschätzung deaktiviert. Wenn das Fahrzeugmodell in einen Achslastschätzungsmodus versetzt wird, sind das Fahrzeugmodell und die Achslastschätzung aktiviert. In einer vereinfachten Variante ist lediglich das Fahrzeugmodell aktiviert, die Achslastschätzung jedoch deaktiviert.

Das Fahrzeugmodell unterscheidet zwischen verschiedenen Beladungsbedingungen. Bei einem Lastkraftwagen 104 ohne Anhänger wird nur die Gesamtmasse des Lastkraftwagens 104 berücksichtigt. Bei einem Lastkraftwagen 104 mit Anhänger 106 wird die Gesamtmasse des Lastzugs 100 und die geschätzte Beladung des Zugfahrzeugs 104 berücksichtigt. Bei einer Zugmaschine 104 mit Sattelauflieger 106 werden die Gesamtmasse des Lastzugs 100 und geschätzte Schwerpunktpositionen des Sattelaufliegers 106 berücksichtigt.

Die Hauptausgabegrößen des Fahrzeugmodells sind eine dynamische und eine statische Achslast der Achsen des betrachteten Fahrzeugs. Das Fahrzeugmodell basiert auf einem zweidimensionalen Fahrzeugmodell, bei dem die einzelnen Räder an den Achsen nicht separat modelliert sind. Dabei werden lediglich die einzelnen Achslasten berücksichtigt.

Die Haupteingangsgrößen des Fahrzeugmodells sind ein Drehmoment M am Antriebsstrang, achsbezogene Bremsdrücke $P_1$, $P_2$, $P_3$ beim Lastkraftwagen 104 und ein Bremsdruck $P_{trl}$ für den Anhänger 106. Weiterhin wird ein geschätzter Steigungswinkel a verwendet.

Wichtige Fahrzeugparameter sind beispielsweise ein Status von Hubachsen, ein Anhängerstatus, eine Last $m_{load}$ auf dem Zugfahrzeug, eine Last auf dem Anhänger $m_{trailer}$ und eine Schwerpunktposition am Anhänger 106 in einer Fahrzeuglängsrichtung.

Das Fahrzeugmodell berücksichtigt den Rollwiderstand und den Windwiderstand. Die Beschreibungen sind sowohl für das Zugfahrzeug 104 als auch für den Anhänger 106 gültig.

Der Luftwiderstand berechnet sich aus der tatsächlichen Fahrzeuggeschwindigkeit mit der Formel:

$$F_{drag} = \frac{1}{2} C_d \rho_{air} \upsilon^2 A$$

Wobei $C_d$ ein Widerstandskoeffizient ist. Dabei wird ein Widerstandskoeffizient von 0,6 für ein Zugfahrzeug 104 und ein Widerstandskoeffizient von 1,3 für eine Fahrzeugkombination 100 angenommen. $\rho$ ist die Dichte von Luft mit (1,2kg/m$^3$). $\upsilon$ ist die tatsächliche Fahrzeuggeschwindigkeit ist, die über das ABS geschätzt wird. $A$ ist die Stirnfläche des Fahrzeugs 104.

Der Luftwiderstand kann durch die Größe der Stirnfläche beeinflusst werden. Der exakte Wert dieses Parameters wird bei Fahrversuchen ermittelt, wobei ein leeres Einzelfahrzeug 104 verwendet wird. Der Angriffspunkt der Windwiderstandskraft kann bei der Auslieferung des Fahrzeugs 104 einprogrammiert werden. Es wird angenommen, dass der Anhänger 106 die gleiche Windwiderstandsfläche wie das Zugfahrzeug 104 aufweist.

Der Rollwiderstand wird unter Verwendung der Achslasten und einem vorkonfigurierten Rollwiderstandskoeffizient ($C_{roll}$) berechnet.

$$F_{roll,axle} = F_{normal,axxle} C_{roll}$$

Der Rollwiderstandskoeffizient ($C_{roll}$) kann durch einen Fahrzeugparameter für das Zugfahrzeug 104 und einem Anhängerparameter für den Anhänger 106 konfiguriert werden. Der exakte Wert wird durch Fahrversuche ermittelt.

Das Fahrzeugmodell kann für Berechnungen am Zugfahrzeug 104 bis zu fünf Achsen in zwei Achsengruppen berechnen. Jede der Achsen kann steuerbar, anhebbar oder antreibbar sein.

Die Schwerpunktposition des leeren Zugfahrzeugs 104 ist bekannt. Die Höhe des Schwerpunkts kann konfiguriert werden. Die Längsposition des Schwerpunkts kann aus den konfigurierten minimalen Achslasten berechnet werden.

$$CoG_x = \frac{\sum_{axle}\left(Wb_{axle} m_{empty,axle}\right)}{m_{empty}}$$

Wobei $Wb_{axle}$ der Achsenabstand ist. $m_{empty,axle}$ sind die konfigurierten minimalen Achslasten. $m_{empty}$ ist die Summe der konfigurierten minimalen Achslasten.

Die minimalen Achslasten werden für das leere Fahrzeug 104 mit allen Achsen am Boden konfiguriert. Die Summe der minimalen Achslasten ist gleich dem Leergewicht des Zugfahrzeugs 104.

**Fig. 2** zeigt eine Darstellung eines Gespanns 100 mit einem Steuergerät 102 gemäß einem Ausführungsbeispiel. Die Darstellung entspricht im Wesentlichen der Darstellung in Fig. 1. Das Gespann 100 ist im Gegensatz zu Fig. 1 ein Sattelzug 100 aus einer Sattelzugmaschine 104 und einem Sattelauflieger 106. Hier sind sattelzugspezifische Eingangsgrößen 108 dargestellt. Die Zuladung des Sattelzugs 100 besteht hier lediglich aus der zugeladenen Masse $m_{trailer}$ auf dem Sattelauflieger. Entscheidend für die auf die Sattelzugmaschine 104 übertragene Last sind dabei eine Schwerpunktposition $CoG_x$ und eine Schwerpunkthöhe $CoG_z$ der Masse $m_{trailer}$. Dabei wird bei dem Sattelauflieger 106 ein Achsabstand 200 zwischen einem Königszapfen 202 und einer virtuellen Hinterachse 204 zugrunde gelegt. Die virtuelle Hinterachse 204 wird an einem gemeinsamen Krafteinleitungspunkt aller Hinterräder des Sattelaufliegers 106 angenommen.

Die tatsächliche Schwerpunktposition $CoG_x$, $CoG_z$ ist abhängig von der Zuladung $m_{trailer}$. Die Ladung wird in der Mitte der Ladefläche platziert. Die Schwerpunktposition $CoG_z$ wird zwischen den Extrema der möglichen Schwerpunkthöhe im Bezug zur Ladung interpoliert.

Eine Zugmaschine 104 ohne Anhänger mit einer geschätzten Gesamtmasse, die höher als das Leergewicht der Zugmaschine ist, wird als Lastkraftwagen mit Ladefläche behandelt.

Wenn die Minimallasten für das Fahrzeug ohne Chassis gesetzt sind, wird die Masse des Chassis als zusätzliche Ladung behandelt. Dadurch ergeben sich keine Probleme der Funktionalität, da das Chassis relativ leicht ist und eine Schwerpunktposition nahe an der Mitte der Ladefläche aufweist.

Tangentialkräfte an den Achsen beinhalten Bremskräfte und Beschleunigungskräfte. Der Rollwiderstand ist nicht Teil der Tangentialkräfte. Die Beschleunigungskraft wird aus einem Drehmomentsignal des Antriebsstrangs berechnet. Wenn mehr als eine Achse angetrieben ist, dann wird von einer gleichmäßigen Drehmomentverteilung ausgegangen.

$$F_{drive,drivenaxle} = \frac{M_{driveline}}{r_{drivenaxle} n_{drivenaxle}}$$

Wobei $M_{driveline}$ das Drehmoment am Antriebsstrang repräsentiert. $r_{drivenaxle}$ repräsentiert den Rad Radius an der Antriebsachse. $n_{drivenaxle}$ gibt die Anzahl der angetriebenen Achsen am Fahrzeug an.

Wenn das Fahrzeug mit Hubachsen ausgestattet ist, wird die Antriebskraft auf angetriebene Achsen mit Bodenkontakt verteilt. Der Effekt jeglicher Bremseinrichtungen, wie Retarder im Antriebsstrang ist in dem Drehmoment des Antriebsstrangs berücksichtigt.

Die Bremskraft wird mit der folgenden Formel berechnet.

$$F_{brake,axle} = \frac{BF_{axle}\left(p_{axle} - p_{thres,axle}\right)}{r_{axle}}$$

Wobei $BF_{axle}$ der Bremsfaktor der Achse ist. $P_{axle}$ ist der gemessene durchschnittliche Druck an der Achse. $p_{thres,axle}$ ist der konfigurierte Druck-Schwellenwert der Achse. $r_{axle}$ ist der Radius des Rads basierend auf einem konfigurierten Radumfang.

Normalkräfte werden für Achsengruppen kalkuliert, als ob das Fahrzeug zwei Achsen aufweisen würde. Die Lasten innerhalb einer Achsengruppe werden durch Zuladungsverhältnisse verteilt.

$$F_{normal,axle} = Ratio_{axle} \frac{F_{normal,group}}{\sum Ratio_{axle}}$$

Wobei $Ratio_{axle}$ ein Konfigurationsparameter ist. Die Zuladungsverhältnisse können in relativer und absoluter Form angegeben werden.

Wenn die Zuladungsverhältnisse in relativer Form angegeben weist die Referenzachse den Faktor 1 auf. Die anderen Achsen beziehen sich auf die Referenzachse.

In absoluter Form geben die Zuladungsverhältnisse die komplette Belastung einer Achsengruppe an und zeigen, welchen Anteil der Gesamtmasse sie ausmachen.

Die zwei Lösungen folgen einer unterschiedlichen Logik, sind technisch jedoch gleichwertig.

Das Fahrzeugmodell kann basierend auf der tatsächlichen Last der festen Achsen den Status der Hubachsen schätzen. Diese Funktion wird verwendet, wenn über den CAN-Bus der Status der Hubachsen nicht übertragen wird.

Das Fahrzeugmodell nimmt an, dass die Hubachse abgesenkt ist, wenn die Last auf die hintere Achsengruppe größer als die Summe der maximal zulässigen einzelnen Achslasten der festen Achsen der hinteren Achsengruppe ist.

Das Fahrzeugmodell nimmt an, dass die Hubachse in der gehobenen Position ist, wenn die Zuladung auf die hintere Achsengruppe kleiner als ein vordefinierter Anteil, zum Beispiel 80 % der Summe der maximal zulässigen einzelnen Achslasten der festen Achsen der hinteren Achsengruppe ist.

Diese Funktion wird für Fahrzeuge verwendet, bei denen die Hubachsen Position nicht über die Fahrzeugelektrik ausgelesen werden kann. Da das Ergebnis dieser Funktion eine Schätzung ist, kann die tatsächliche Position der Hubachsen davon abweichen.

Der Anhänger wird als zweiachsiger Universalanhänger modelliert. Dabei werden zwei verschiedene Typen von Anhängern definiert. Sattelauflieger 106 und über eine Deichsel gezogene Anhänger.

Der Unterschied zwischen den beiden Anhängertypen ist, dass der über die Deichsel gezogene Anhänger sein eigenes Gewicht vollständig auf die Achsen verteilt, während der Sattelauflieger zumindest teilweise durch die Sattelzugmaschine abgestützt ist. Sattelzugmaschinen sind aufgrund des dynamischen Ladungstransfers durch die Sattelauflieger stark beeinflusst.

Der verwendete Anhänger Typ ist durch den Typ des Zugfahrzeugs vorbestimmt. Sattelzugmaschinen 104 werden nur in Verbindung mit Sattelauflieger 106 verwendet. Andere Fahrzeugtypen werden mit über die Deichsel gezogenen Anhängern betrieben. Die Berechnung des Luftwiderstands und Rollwiderstand entspricht der Berechnung am Zugfahrzeug.

Wenn ein über die Deichsel gezogener Anhänger an eine Sattelzugmaschine angekoppelt wird, sind die Ergebnisse des Fahrzeugmodells nicht verlässlich.

Sattelaufliegerspezifische Einstellungen. Dieser Anhängertyp ist durch seine Masse, seinen Radabstand 200 und seine erwartete Schwerpunktposition $CoG_x$, $CoG_z$ charakterisiert. Der Radabstand 200 und die Extrema der Schwerpunktposition $CoG_x$, $CoG_z$ können konfiguriert werden. Dabei ist nicht der exakte Wert dieser Parameter wichtig, sondern ihr Verhältnis. Wenn das Zugfahrzeug 104 permanent mit dem gleichen Anhänger 106 verbunden ist, können diese Werte exakt konfiguriert werden. Ansonsten können erwartete Werte konfiguriert werden.

Beim Sattelauflieger ist $m_{trailer}$ eine geschätzte Anhängermasse. $CoG_x$ ist eine lastbasierte Interpolation der horizontalen Schwerpunktposition. $CoG_z$ ist eine lastbasierte Interpolation der vertikalen Schwerpunktposition. *Wheelbase* ist der Radabstand 200 des Anhängers 106. Der Königszapfen 202 wird als ungebremste virtuelle Vorderachse angenommen. Die Last auf diese virtuelle Vorderachse wird von der Zugmaschine 104 abgestützt.

Deichselgezogene anhängerspezifische Einstellungen. Dieser Anhängertyp kann lediglich durch seine Gesamtmasse charakterisiert werden. Andere Parameter haben keinen Einfluss auf die Achslasten des Zugfahrzeugs aber sie müssen gültig sein. Die Deichsel wird als horizontal angenommen. Jegliche Abweichung von dieser Grundposition wird ignoriert. Eine Deichsel mit einem steilen Winkel kann einen negativen Effekt auf die Achslastschätzung aufweisen.

Das Fahrzeugmodell wurde entwickelt, um immer verfügbar zu sein, falls es konfiguriert wird. Einige Grundvoraussetzungen sind jedoch erforderlich um ein funktionsfähiges Modell und Achslastschätzung zu bekommen. Falls eine Eingangsgröße nicht mehr verfügbar ist, wird die Berechnung mit einer geringeren Genauigkeit fortgesetzt.

Für den Fall, dass eine oder mehrere Eingangsgrößen des Fahrzeugmodells nicht mehr verfügbar sind, sind verschiedene Rückfallpositionen einprogrammiert. Der Ausgangszustand ist der vollständig einsatzbereite Zustand. Dabei sind alle Eingangsgrößen verfügbar.

Bei einer Druckbegrenzung sind die Bremsdrücke am Zugfahrzeug nicht mehr achsenweise verfügbar. Bei einer Anhängerbegrenzung ist der gemessene TCM-Druck nicht mehr verfügbar. Bei einer Drehmomentbegrenzung ist das Antriebsdrehmoment über den CAN-Bus nicht mehr verfügbar. Bei einer Winkelbegrenzung ist das Böschungssignal beziehungsweise das Steigungssignal nicht mehr verfügbar.

Falls eine dieser Einschränkungen aktiv wird, bedeutet das, dass die geschätzten Fahrzeugeigenschaften, hauptsächlich die Achslasten des Zugfahrzeugs ungenau sein können.

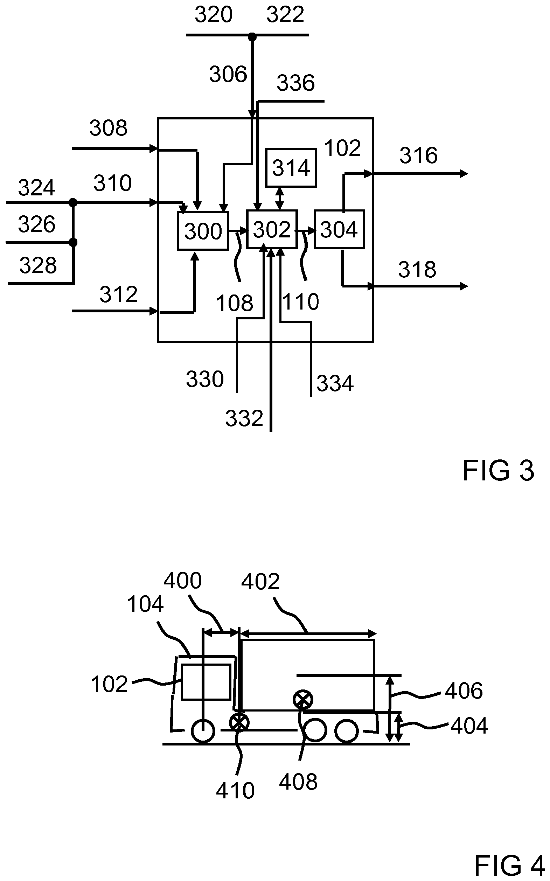

**Fig. 3** zeigt ein Blockschaltbild eines Steuergeräts 102 zum Betreiben eines Gespanns gemäß einem Ausführungsbeispiel. Das Steuergerät entspricht im Wesentlichen den in den Figuren 1 und 2 dargestellten Steuergeräten. Das Steuergerät 102 weist eine Einrichtung 300 zum Einlesen, eine Einrichtung 302 zum Bestimmen und eine Einrichtung 304 zum Bereitstellen auf. Von der Einrichtung 300 zum Einlesen werden Eingangsgrößen 108 von dem Zugfahrzeug und dem gezogenen Fahrzeug eingelesen. Die Eingangsgrößen umfassen eine Zuladungsinformation 306 über eine Zuladung des Gespanns, eine Drehmomentinformation 308 über ein Drehmoment an einem Antriebsstrang des Zugfahrzeugs, eine Bremsdruckinformation 310 über im Gespann bereitgestellte Bremsdrücke und eine Steigungswinkelinformation 312 über einen Steigungswinkel einer Fahrbahn unter dem Gespann. In der Einrichtung 302 zum Bestimmen werden unter Verwendung der Eingangsgrößen 108 und einer Verarbeitungsvorschrift 314 Ausgangsgrößen 110 bestimmt. Die Ausgangsgrößen 110 werden von der Einrichtung 304 zum Bereitstellen als eine Vorderachslastinformation 316 über eine Achslast auf eine Vorderachse des Zugfahrzeugs und eine Hinterachslastinformation 318 über eine Achslast auf eine Hinterachse des Zugfahrzeugs bereitgestellt. Die Ausgangsgrößen 110 werden zum Ansteuern einer Bremsanlage des Gespanns verwendet, um das Gespann zu betreiben.

In einem Ausführungsbeispiel wird als Zuladungsinformation 306 eine Zugfahrzeugzuladungsinformation 320 über eine Zuladung des Zugfahrzeugs und eine Anhängerzuladungsinformation 322 über eine Zuladung eines Anhängers als gezogenes Fahrzeug oder eine Sattelaufliegerzuladungsinformation 322 über eine Zuladung eines Sattelaufliegers als gezogenes Fahrzeug eingelesen.

In einem Ausführungsbeispiel wird als Bremsdruckinformation 310 eine Vorderachsenbremsdruckinformation 324 über einen Bremsdruck an der Vorderachse, eine Hinterachsenbremsdruckinformation 326 über einen Bremsdruck an der Hinterachse und eine Anhängerbremsdruckinformation 328 über einen Bremsdruck am gezogenen Fahrzeug eingelesen.

In einem Ausführungsbeispiel werden die Ausgangsgrößen 110 ferner unter Verwendung einer Hubachseninformation 330 über einen Status von Hubachsen des Gespanns bestimmt.

In einem Ausführungsbeispiel werden die Ausgangsgrößen 110 ferner unter Verwendung einer Rollwiderstandsinformation 332 über einen Rollwiderstand des Gespanns bestimmt.

In einem Ausführungsbeispiel werden die Ausgangsgrößen 110 ferner unter Verwendung einer Windwiderstandsinformation 334 über einen Windwiderstand des Gespanns bestimmt.

In einem Ausführungsbeispiel werden die Ausgangsgrößen 110 ferner unter Verwendung einer Geschwindigkeitsinformation 336 über eine Geschwindigkeit des Gespanns bestimmt.

**Fig. 4** zeigt eine Darstellung eines Zugfahrzeugs 104 mit einem Steuergerät 102 gemäß einem Ausführungsbeispiel. Das Zugfahrzeug 104 entspricht im Wesentlichen der Darstellung in Fig. 1. Hier sind an dem Zugfahrzeug 104 weitere Eingangsgrößen des Steuergeräts 102 dargestellt. Dabei ist ein längsgerichteter Abstand 400 einer Vorderkante der Ladefläche von der Vorderachse dargestellt. Ebenso ist eine Länge 402 der Ladefläche dargestellt. Weiterhin sind eine Höhe 404 der Ladefläche über der Straße und eine maximal zulässige Höhe 406 des eines Schwerpunkts 408 der Zuladung über der Ladefläche dargestellt. Zusätzlich ist ein Schwerpunkt 410 des leeren Zugfahrzeugs 104 dargestellt.

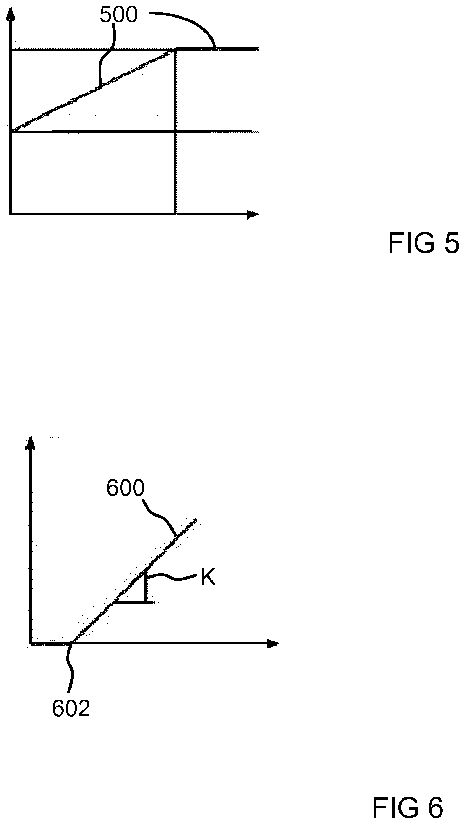

**Fig. 5** zeigt eine Darstellung eines Zusammenhangs zwischen einer Anhängerzuladung und einer Schwerpunktposition gemäß einem Ausführungsbeispiel. Der Zusammenhang ist als Kurve 500 in einem Diagramm dargestellt, das auf der Abszisse die Anhängerzuladung und auf der Ordinate die Scherpunktposition in der Höhe angetragen hat. Die Kurve 500 repräsentiert eine idealisierte Anhängerzuladung. Die Schwerpunktposition variiert dabei zwischen einer minimalen Schwerpunktposition bei minimaler Zuladung und einer maximalen Schwerpunktposition bei maximaler Zuladung. Die Kurve 500 erstreckt sich zwischen beiden Punkten linear. Ab der maximalen Zuladung steigt die Schwerpunkthöhe nicht weiter an und bleibt auf der maximalen Schwerpunktposition.

Die Schwerpunktposition des Anhängers ist teilweise eine Eingabegröße und teilweise eine berechnete Größe. Die Längsposition $CoG_x$ des Schwerpunkts wird durch die Ladungsschätzungskomponenten geschätzt. Die Höhe $CoG_z$ des Schwerpunkts wird zwischen einem Minimalwert bei minimaler Zuladung und einem Maximalwert bei maximaler Zuladung in Abhängigkeit von der tatsächlichen Zuladung geschätzt.

**Fig. 6** zeigt eine Darstellung eines Zusammenhangs zwischen einem Bremsdruck und einer Bremskraft gemäß einem Ausführungsbeispiel. Der Zusammenhang ist als Kurve 600 in einem Diagramm dargestellt, das auf der Abszisse den Bremsdruck und auf der Ordinate die Bremskraft angetragen hat. Die Bremskraft ist null, bis ein Druckschwellenwert 602 erreicht ist. Von da steigt die Bremskraft proportional zu dem Bremsdruck mit einer Steigung von K linear an. K kann als Bremsfaktor K bezeichnet werden. Die Bremseigenschaften eines Anhängers sind durch dem normierten Bremsfaktor K und einen Druckschwellenwert beschrieben. Diese Eigenschaften werden wie folgt berechnet.

$$F_{brake,trailer,axle} = Km_{trailer,axle}\left(p_{trailer,axle} - p_{thres,trailer,axle}\right)$$

Wobei $m_{trailer,axle}$ eine geschätzte Achslast des Anhängers ist. $p_{thres,trailer,axle}$ ist ein erfasster Druck am Anhänger. $p_{thres,trailer,axle}$ ist ein Druckschwellenwert pro Anhängerachse, der hier mit 0,6 bar angenommen wird. K ist der normierte Bremsfaktor. Der Bremsfaktor wird hiermit eins angenommen.

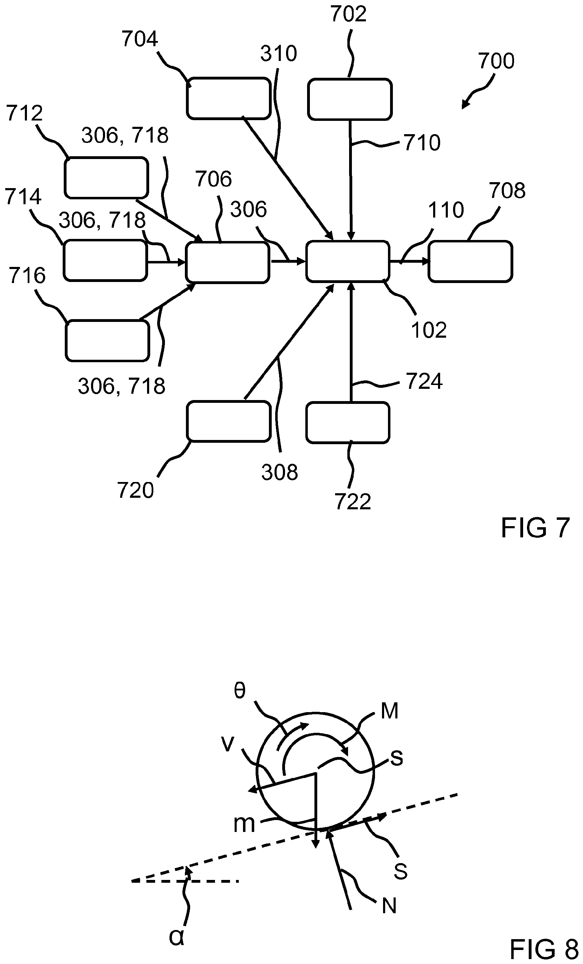

**Fig. 7** zeigt ein Blockschaltbild eines Systems 700 zum Betreiben eines Lastzugs gemäß einem Ausführungsbeispiel. Das Steuergerät, wie es beispielsweise in Fig. 3 dargestellt ist, ist ein zentraler Bestandteil des Systems 700. Das System 700 umfasst ein AMS-Modul 702, einen Kanalkoordinator 704, einen Ladungskoordinator 706 und ein Bremskraftberechnungsmodul 708. Das AMS-Modul 702 stellt eine Gesamtmasseninformation 710 für das Steuergerät 102 bereit. Der Kanalkoordinator 704 stellt die Bremsdruckinformation 310 bereit. Der Ladungskoordinator 706 stellt die Zuladungsinformation 306 bereit. Der Ladungskoordinator 706 ist mit einem gesamtmassenbasierten Achslastschätzmodul 712, einem bremskraftbasierten Achslastschätzmodul 714 und einem antriebskraftbasierten Achslastschätzmodul 716 verbunden. Von den Achslastschätzmodulen 712, 714, 716 werden jeweils eine Zuladungsinformation 306 und eine Schätzungsqualitätsinformation 718 bereitgestellt, die zu der an das Steuergerät bereitgestellten Zuladungsinformation 306 vereint werden.

Das Steuergerät 102 liest von einem CAN-Bus 720 die Drehmomentinformation 308 ein und liest aus einem Speicher 722 eine Fahrzeuggeometrie 724 aus.

Das Steuergerät 102 verarbeitet die Eingangsgrößen 306, 308, 310, 710, 724 zu den Ausgangsgrößen 110 und stellt sie für das Bremskraftberechnungsmodul 708 bereit.

**Fig. 8** zeigt eine Darstellung von Parametern an einem Rad 800 gemäß einem Ausführungsbeispiel. Das Rad 800 ist hier vereinfacht als Kreis ohne Verformung dargestellt. Das Rad 800 rollt auf einer Schräge 802 mit einem Steigungswinkel $\alpha$ mit einer Geschwindigkeit v abwärts. Dabei weist das Rad 800 eine nicht dargestellte Drehgeschwindigkeit auf. Das Rad 800 wird mit einer Radlast m belastet. Die Radlast m greift an einer Rotationsachse des Rads 800 an und wirkt lotrecht nach unten. Im Idealfall ist die Radlast m auf einer Seite eines Fahrzeugs die halbe Achslast. Durch die Schräge 802 resultiert an einer Radaufstandsfläche zwischen dem Rad 800 und der Schräge 802 eine nicht eingetragene Hangabtriebskraft und eine Normalkraft N.

In einer vereinfachten Betrachtungsweise repräsentiert das Rad 800 alle Räder einer Achse. Dann repräsentiert die Radlast m die gesamte Achslast.

An dem Rad 800 wirkt um die Rotationsachse ein Drehmoment M. Durch das Drehmoment M resultiert an der Radaufstandsfläche eine Längskraft S. Hier ist das Drehmoment M ein verzögerndes Moment M. Die Längskraft S ist damit eine Bremskraft S und wirkt entgegen der Hangabtriebskraft.

Das Rad 800 weist ein Trägheitsmoment $\theta$ auf. Das Trägheitsmoment $\theta$ repräsentiert einen Widerstand des Rads 800 gegen eine Änderung seiner Drehgeschwindigkeit.

Mit anderen Worten wird eine modellbasierte Fahrzeugstatus Vorverarbeitung beschrieben. Das Ziel dieser Funktion ist es, genaue Radgeschwindigkeiten dem geringstmöglichen zeitlichen Verzug bereitzustellen.

Das Modell des Rads 800 ist auf die Dynamik des Rads 800 fokussiert. Obwohl dieses Modell relativ einfach aufgebaut ist, kann es die grundsätzlichen physikalischen Gesetze abbilden.

Die Längskraft S und das Moment M am Rad 800 resultieren in den folgenden Gleichungen.

$$S = m \cdot \dot{\upsilon}$$

$$\Theta \cdot \dot{\omega} = M - r \cdot S$$

Wobei m die Last auf dem Rad 800 ist, v die Längsbewegung des Rads 800 beziehungsweise die Fahrzeuggeschwindigkeit ist, $\Theta$ die Massenträgheit des Rads 800, $\omega$ die Winkelgeschwindigkeit des Rads 800, M das Brems- oder Antriebsmoment beziehungsweise die Brems- oder Antriebsreibung, r der Radius des Rads 800, S die Längskraft, N die Normalkraft ist.

Nachdem S aus den Gleichungen substituiert wurden es ergibt sich.

$$S = slip \cdot slipstiffness \cdot m \cdot g \cdot \cos(\alpha)$$

$$slip = \frac{r \cdot \omega - \upsilon}{\upsilon}$$

durch Vereinfachung von $\cos(\alpha)=1$ für kleine $\alpha$ können die Gleichungen wie folgt aufgelöst werden.

$$\dot{\upsilon} = -g \cdot ss + \frac{g \cdot ss \cdot r \cdot \omega}{\upsilon}$$

$$\dot{\omega} = \frac{ss \cdot r \cdot m \cdot g}{\Theta} - \frac{ss \cdot r^2 \cdot m \cdot g \cdot \omega}{\Theta \cdot \upsilon} + \frac{M}{\Theta}$$

Die Gleichungen können unter Verwendung eines gleitenden Modusbeobachters gelöst werden. Es kann ein lineares System durch folgende Gleichungen bestimmt werden.

$$\dot{x} = A \cdot x + B \cdot u$$

$$y = C \cdot x$$

Dabei ist x der Systemstatus, u seine Eingangsgrößen und y seine Ausgangsgrößen. Diese Gleichungen sagen aus, dass die aktuellen Ausgangsgrößen und der zukünftige Status vom aktuellen Status und aktuellen Eingangsgrößen abhängen. Die Gleichungen können auch in einer anderen Form dargestellt werden, obwohl diese nicht linear ist.

$$\begin{bmatrix} \dot{\upsilon} \\ \dot{\omega} \end{bmatrix} = \begin{bmatrix} -\dfrac{ss \cdot g}{\upsilon} & \dfrac{ss \cdot g \cdot r}{\upsilon} \\ \dfrac{ss \cdot g \cdot r \cdot m}{\upsilon \cdot \Theta} & -\dfrac{ss \cdot g \cdot r^2 \cdot m}{\upsilon \cdot \Theta} \end{bmatrix} \begin{bmatrix} \upsilon \\ \omega \end{bmatrix} + \begin{bmatrix} 0 \\ \dfrac{1}{\Theta} \end{bmatrix} M$$

$$y = \begin{bmatrix} 0 & r \end{bmatrix} \begin{bmatrix} \upsilon \\ \omega \end{bmatrix}$$

Die Radgeschwindigkeit und die Winkelgeschwindigkeit werden als Statusvariablen ausgewählt.

Das Beobachtermodell des physikalischen Systems wird aus den vorhergehenden Gleichungen abgeleitet. Weitere Terme werden eingebunden, um eine Konvergenz des Modells zum System zu erreichen. Insbesondere wird die Ausgangsgröße des Beobachters von der Ausgangsgröße des Systems abgezogen und dann mit der spezifischen Matrix multipliziert. Es gibt mehrere Möglichkeiten dies zu tun, die modellbasierte Fahrzeugstatus Vorverarbeitung basiert auf einem gleitenden Modus Beobachter für die Unsicherheit des Modells. Dieses Modell legten Beobachter wie folgt fest:

$$\dot{\hat{x}} = A \cdot \hat{x} + B \cdot u - G_1 \cdot C \cdot (x - \hat{x}) + G_n \cdot \upsilon$$

Dabei sind die Matrix A, B, C durch die vorhergehenden Gleichungen bestimmt. X ist der gemessene Wert. $\hat{x}$ Ist der von dem Modell geschätzte Wert. $G_l$ und $G_n$ sind Systemkonstanten, die durch ein externes Skript berechnet werden.

Um das Beobachtermodell zu benutzen, werden die Matrizen in einem Arbeitspunkt linearisiert. Dabei ist

$$v = 16 \frac{m}{s}$$

slipstiffness = 8

$$g = 9{,}81 \frac{m}{s^2}$$

r= 0,5m
$\Theta = 10$
m = 7300kg
die Matrizen:

$$A = \begin{pmatrix} 4{,}905 & 2{,}4525 \\ 1825{,}0 & 882{,}9 \end{pmatrix}, B = \begin{pmatrix} 0 \\ 0{,}1 \end{pmatrix}, C = \begin{pmatrix} 0 & 0{,}5 \end{pmatrix}$$

die spezifischen $G_n$ $G_l$ (4,905 7,85)and (0 0,1)

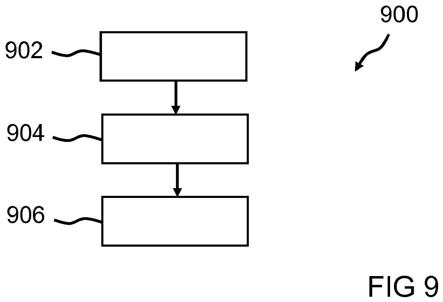

**Fig. 9** zeigt ein Ablaufdiagramm eines Verfahrens 900 zum Betreiben eines Gespanns gemäß einem Ausführungsbeispiel. Das Verfahren 900 weist einen Schritt 902 des Einlesens, einen Schritt 904 des Bestimmens und einen Schritt 906 des Verwendens auf. Das Gespann besteht wie in den Figuren 1 und 2 aus einem Zugfahrzeug und einem gezogenen Fahrzeug. Dabei werden im Schritt 902 des Einlesens Eingangsgrößen von dem Zugfahrzeug und dem gezogenen Fahrzeug eingelesen. Die Eingangsgrößen umfassen zumindest eine Zuladungsinformation über eine Zuladung des Gespanns, eine Drehmomentinformation über ein Drehmoment an einem Antriebsstrang des Zugfahrzeugs, eine Bremsdruckinformation über im Gespann bereitgestellte Bremsdrücke und eine Steigungswinkelinformation über einen Steigungswinkel einer Fahrbahn unter dem Gespann. Im Schritt 904 des Bestimmens werden unter Verwendung der Eingangsgrößen und einer Verarbeitungsvorschrift Ausgangsgrößen bestimmt. Dabei umfassen die Ausgangsgrößen eine Vorderachslastinformation über eine Achslast auf eine Vorderachse des Zugfahrzeugs und eine Hinterachslastinformation über eine Achslast auf eine Hinterachse des Zugfahrzeugs. Im Schritt 906 des Verwendens werden die Ausgangsgrößen zum Ansteuern einer Bremsanlage des Gespanns verwendet, um das Gespann zu betreiben.

BEZUGSZEICHENLISTE

| | |
|---|---|
| 100 | Gespann, Lastzug, Sattelzug |
| 102 | Steuergerät, Modul |
| 104 | Zugfahrzeug, Sattelzugmaschine |
| 106 | gezogenes Fahrzeug, Anhänger, Sattelauflieger |
| 107a | Ladefläche |
| 107b | angetriebene Hinterachse |
| 107c | weitere Hinterachse |
| 107d | Vorderachse |
| 108 | Eingangsgrößen |
| 110 | Ausgangsgrößen |
| 112 | Bremsanlage |
| 114 | Antriebsstrang |
| 116 | Fahrbahn |
| M | Drehmoment |
| $P_1$, $P_2$, $P_3$, $P_{trl}$ | Bremsdrücke |
| $\alpha$ | Steigungswinkel |
| $m_{load}$, $m_{trailer}$ | Masse |
| $CoG_x$, | $CoG_z$ Schwerpunktposition |
| 200 | Achsabstand |
| 202 | Königszapfen |
| 204 | virtuelle Hinterachse |
| 300 | Einrichtung zum Einlesen |
| 302 | Einrichtung zum Bestimmen |
| 304 | Einrichtung zum Bereitstellen |
| 306 | Zuladungsinformation |
| 308 | Drehmomentinformation |
| 310 | Bremsdruckinformation |
| 312 | Steigungswinkelinformation |
| 314 | Verarbeitungsvorschrift |
| 316 | Vorderachslastinformation |
| 318 | Hinterachslastinformation |
| 320 | Zugfahrzeugzuladungsinformation |
| 322 | Anhängerzuladungsinformation |
| 324 | Vorderachsenbremsdruckinformation |
| 326 | Hinterachsenbremsdruckinformation |
| 328 | Anhängerbremsdruckinformation |
| 330 | Hubachseninformation |
| 332 | Rollwiderstandsinformation |
| 334 | Windwiderstandsinformation |
| 336 | Geschwindigkeitsinformation |
| 400 | Abstand |

| 402 | Länge der Ladefläche |
| 404 | Höhe der Ladefläche |
| 406 | maximal zulässige Höhe |
| 408 | Schwerpunkt der Zuladung über der Ladefläche |
| 410 | Schwerpunkt des leeren Zugfahrzeugs |
| 500 | Kurve |
| 600 | Kurve |
| 602 | Druckschwellenwert |
| K | Bremsfaktor |
| 700 | System zum Betreiben eines Lastzugs |
| 702 | AMS-Modul |
| 704 | Kanalkoordinator |
| 706 | Ladungskoordinator |
| 708 | Bremskraftberechnungsmodul |
| 710 | Gesamtmasseninformation |
| 712 | Achslastschätzmodul gesamtmassenbasiert |
| 714 | Achslastschätzmodul bremskraftbasiert |
| 716 | Achslastschätzmodul antriebskraftbasiert |
| 718 | Schätzungsqualitätsinformation |
| 720 | CAN-Bus |
| 722 | Speicher |
| 724 | Fahrzeuggeometrie |
| 800 | Rad |
| 802 | Schräge |
| $\alpha$ | Steigungswinkel |
| v | Geschwindigkeit |
| m | Radlast |
| N | Normalkraft |
| S | Längskraft |
| $\Theta$ | Trägheitsmoment |
| 900 | Verfahrens zum Betreiben eines Gespanns |
| 902 | Schritt des Einlesens |
| 904 | Schritt des Bestimmens |
| 906 | Schritt des Verwendens |

**Patentansprüche**

1. Verfahren (900) zum Betreiben eines Gespanns (100) aus einem Zugfahrzeug (104) und einem gezogenen Fahrzeug (106),
   **dadurch gekennzeichnet, dass**

   - in einem Schritt (902) des Einlesens Eingangsgrößen (108) von dem Zugfahrzeug (104) und dem gezogenen Fahrzeug (106) eingelesen werden, wobei die Eingangsgrößen (108) eine Zuladungsinformation (306) über eine Zuladung ($m_{load}$, $m_{trailer}$) des Gespanns (100), eine Drehmomentinformation (308) über ein Drehmoment (M) an einem Antriebsstrang (114) des Zugfahrzeugs (104), eine Bremsdruckinformation (310) über im Gespann (100) bereitgestellte Bremsdrücke ($P_1$, $P_2$, $P_3$, $P_{trl}$) und eine Steigungswinkelinformation (312) über einen Steigungswinkel (a) einer Fahrbahn (116) unter dem Gespann (100) umfassen;
   - in einem Schritt (904) des Bestimmens unter Verwendung der Eingangsgrößen (108) und einer Verarbeitungsvorschrift (314) Ausgangsgrößen (110) bestimmt werden, wobei die Ausgangsgrößen (110) eine Vorderachslastinformation (316) über eine Achslast (m) auf eine Vorderachse (107d) des Zugfahrzeugs (104) und eine Hinterachslastinformation (318) über eine Achslast (m) auf eine Hinterachse (107b, 107c) des Zugfahrzeugs (104) umfassen; und
   - in einem Schritt (906) des Verwendens die Ausgangsgrößen (110) zum Ansteuern einer Bremsanlage (112) des Gespanns (100) verwendet werden, um das Gespann (100) zu betreiben.

2. Verfahren (900) gemäß Anspruch 1,
   **dadurch gekennzeichnet, dass**

im Schritt (902) des Einlesens als Zuladungsinformation (306) eine Zugfahrzeugzuladungsinformation (320) über eine Zuladung ($m_{load}$) des Zugfahrzeugs (104) und eine Anhängerzuladungsinformation (322) über eine Zuladung ($m_{trailer}$) eines Anhängers (106) als gezogenes Fahrzeug (106) oder eine Sattelaufliegerzuladungsinformation (322) über eine Zuladung ($m_{trailer}$) eines Sattelaufliegers (106) als gezogenes Fahrzeug (106) eingelesen wird.

3. Verfahren (900) gemäß einem der vorhergehenden Ansprüche,
   **dadurch gekennzeichnet, dass**
   im Schritt (902) des Einlesens als Bremsdruckinformation (310) eine Vorderachsenbremsdruckinformation (324) über einen Bremsdruck ($P_1$) an der Vorderachse (107d), eine Hinterachsenbremsdruckinformation (326) über einen Bremsdruck ($P_2$) an der Hinterachse (107b, 107c) und eine Anhängerbremsdruckinformation (328) über einen Bremsdruck ($P_{trl}$) am gezogenen Fahrzeug (106) eingelesen wird.

4. Verfahren (900) gemäß einem der vorhergehenden Ansprüche,
   **dadurch gekennzeichnet, dass**
   im Schritt des Bestimmens (904) die Ausgangsgrößen (110) ferner unter Verwendung einer Hubachseninformation (330) über einen Status von Hubachsen (107c) des Gespanns (100) bestimmt werden.

5. Verfahren (900) gemäß einem der vorhergehenden Ansprüche,
   **dadurch gekennzeichnet, dass**
   im Schritt des Bestimmens (904) die Ausgangsgrößen (110) ferner unter Verwendung einer Rollwiderstandsinformation (332) über einen Rollwiderstand des Gespanns (100) bestimmt werden.

6. Verfahren (900) gemäß einem der vorhergehenden Ansprüche,
   **dadurch gekennzeichnet, dass**
   im Schritt des Bestimmens (904) die Ausgangsgrößen (110) ferner unter Verwendung einer Windwiderstandsinformation (334) über einen Windwiderstand des Gespanns (100) bestimmt werden.

7. Verfahren (900) gemäß einem der vorhergehenden Ansprüche,
   **dadurch gekennzeichnet, dass**
   im Schritt des Bestimmens (304) die Ausgangsgrößen (110) ferner unter Verwendung einer Geschwindigkeitsinformation (336) über eine Geschwindigkeit (v) des Gespanns (100) bestimmt werden.

8. Verfahren (900) gemäß Anspruch 7,
   **dadurch gekennzeichnet, dass**
   im Schritt (902) des Einlesens ferner Radgeschwindigkeitsinformationen über Drehgeschwindigkeiten von Rädern (800) des Gespanns (100) eingelesen werden, und in einem Schritt des Ermittelns die Geschwindigkeitsinformation (336) unter Verwendung der Radgeschwindigkeitsinformationen ermittelt wird.

9. Steuergerät (102), das eingerichtet ist, das Verfahren (900) gemäß einem der vorangegangenen Ansprüche auszuführen.

10. Computerprogramm, das bei seiner Ausführung durch einen Computer diesen veranlasst, das Verfahren (900) gemäß einem der vorangegangenen Ansprüche auszuführen.

**Claims**

1. Method (900) for operating a vehicle combination (100) consisting of a towing vehicle (104) and a towed vehicle (106),
   **characterised in that**

   - input variables (108) of the towing vehicle (104) and of the towed vehicle (106) are read in in a read-in step (902), wherein the input variables (108) comprise an item of useful load information (306) relating to a useful load ($m_{load}$, $m_{trailer}$) of the vehicle combination (100), an item of torque information (308) relating to a torque (M) on a drive train (114) of the towing vehicle (104), an item of brake pressure information (310) relating to brake pressures ($P_1$, $P_2$, $P_3$, $P_{trl}$) provided in the vehicle combination (100) and an item of inclination angle information (312) relating to an angle of inclination (a) of a road (116) under the vehicle combination (100);
   - output variables (110) are determined in a determining step (904) using the input variables (108) and a processing specification (314), wherein the output variables (110) comprise an item of front axle load information (316) relating to an axle load (m) on a front axle (107d) of the towing vehicle (104) and an item of rear axle load information (318) relating to an axle load (m) on a rear axle (107b, 107c) of the towing vehicle (104); and
- the output variables (110) are used to actuate a brake system (112) of the vehicle combination (100) in a using step (906) in order to operate the vehicle combination (100).

2. Method (900) according to claim 1,
**characterised in that**
an item of towing vehicle useful load information (320) relating to a useful load ($m_{load}$) of the towing vehicle (104) and an item of trailer useful load information (322) relating to a useful load ($m_{trailer}$) of a trailer (106) as the towed vehicle (106) or an item of semitrailer useful load information (322) relating to a useful load ($m_{trailer}$) of a semitrailer (106) as the towed vehicle (106) is read in as the item of useful load information (306) in the read-in step (902).

3. Method (900) according to any of the preceding claims,
**characterised in that**
an item of front axle brake pressure information (324) relating to a brake pressure ($P_1$) on the front axle (107d), an item of rear axle brake pressure information (326) relating to a brake pressure ($P_2$) on the rear axle (107b, 107c) and an item of trailer brake pressure information (328) relating to a brake pressure (Ptri) on the towed vehicle (106) is read in as the item of brake pressure information (310) in the read-in step (902).

4. Method (900) according to any of the preceding claims,
**characterised in that**
the output variables (110) are also determined using an item of lift axle information (330) relating to a status of lift axles (107c) of the vehicle combination (100) in the determining step (904).

5. Method (900) according to any of the preceding claims,
**characterised in that**
the output variables (110) are also determined using an item of rolling resistance information (332) relating to a rolling resistance of the vehicle combination (100) in the determining step (904).

6. Method (900) according to any of the preceding claims,
**characterised in that**
the output variables (110) are also determined using an item of wind resistance information (334) relating to a wind resistance of the vehicle combination (100) in the determining step (904).

7. Method (900) according to any of the preceding claims,
**characterised in that**
the output variables (110) are also determined using an item of speed information (336) relating to a speed (v) of the vehicle combination (100) in the determining step (304).

8. Method (900) according to claim 7,
**characterised in that**
items of wheel speed information relating to rotational speeds of wheels (800) of the vehicle combination (100) are read in in the read-in step (902), and the item of speed information (336) is ascertained using the items of wheel speed information in an ascertaining step.

9. Control device (102), which is configured to carry out the method (900) according to any of the preceding claims.

10. Computer program, which, when executed by a computer, prompts same to carry out the method (900) according to any of the preceding claims.

**Revendications**

1. Procédé (900) pour faire fonctionner un attelage (100) composé d'un véhicule (104) tracteur et d'un véhicule (106) tracté,
**caractérisé en ce que**,

- dans un stade (902) de la lecture, des grandeurs (108) d'entrée sont lues par le véhicule (104) tracteur et par le véhicule (106) tracté, les grandeurs (108) d'entrée comprenant une information (306) de charge sur une charge ($M_{load}$, $M_{trailer}$) de l'attelage (100), une information (308) de couple sur un couple (M) à un timon (104) d'entraînement du véhicule (104) tracteur, une information (310) de pression de frein sur des pressions ($P_1$, $P_2$, $P_3$, $P_{tri}$) de frein mises à disposition dans l'attelage (100) et une information (312) d'angle de pente sur un angle ($\alpha$) de pente d'une voie (116) de circulation sous l'attelage (100) ;
- dans un stade (904) de la détermination, en utilisant les grandeurs (108) d'entrée et une prescription (314) de traitement, des grandeurs (110) de sortie sont déterminées, les grandeurs (110) de sortie comprenant une information (316) de charge d'essieu avant sur une charge (m) d'essieu sur un essieu (107d) avant du véhicule (104) tracteur et une information (318) de charge d'essieu arrière sur une charge (m) d'essieu sur un essieu (107b, 107c) arrière du véhicule (104) tracteur ; et
- dans un stade (906) de l'utilisation, les grandeurs (110) de sortie sont utilisées pour commander un système (112) de frein de l'attelage afin de faire fonctionner l'attelage (100).

**2.** Procédé (900) suivant la revendication 1,
**caractérisé en ce que**,
dans le stade (902) de la lecture, il est lu, comme information (306) de charge, une information (320) de charge de véhicule tracteur sur une charge ($M_{load}$) du véhicule (104) tracteur et une information (322) de charge de remorque sur une charge ($M_{trailer}$) d'une remorque (106) comme véhicule (106) tracté ou une information (322) de charge de semi-remorque sur une charge ($M_{trailer}$) d'une semi-remorque (106) comme véhicule (106) tracté.

**3.** Procédé (900) suivant l'une des revendications précédentes, **caractérisé en ce que**,
dans le stade (902) de la lecture, il est lu, comme information (310) de pression de frein, une information (324) de pression de frein d'essieu avant sur une pression ($P_1$) de frein à l'essieu (107d) avant, une information (326) de pression de frein d'essieu d'arrière sur une pression ($P_2$) de frein à l'essieu (107b, 107c) arrière et une information (328) de pression de frein de remorque sur une pression ($P_{tri}$) de frein au véhicule (106) tracté.

**4.** Procédé (900) suivant l'une des revendications précédentes, **caractérisé en ce que**,
dans le stade de la détermination (904), les grandeurs (110) de sortie sont déterminées, en outre, en utilisant une information (330) d'essieux relevables sur un état d'essieux (107) relevables de l'attelage (100).

**5.** Procédé (900) suivant l'une des revendications précédentes, **caractérisé en ce que**,
dans le stade de la détermination (904), les grandeurs (110) de sortie sont déterminées, en outre, en utilisant une information (332) de résistance au roulement sur une résistance au roulement de l'attelage (100).

**6.** Procédé (900) suivant l'une des revendications précédentes, **caractérisé en ce que**,
dans le stade de la détermination (904), les grandeurs (110) de sortie sont déterminées, en outre, en utilisant une information (334) de résistance au vent sur une résistance au vent de l'attelage (100).

**7.** Procédé (900) suivant l'une des revendications précédentes, **caractérisé en ce que**,
dans le stade de la détermination (304), les grandeurs (110) de sortie sont déterminées, en outre, en utilisant une information de vitesse sur une vitesse (v) de l'attelage (100).

**8.** Procédé (900) suivant la revendication 7,
**caractérisé en ce que**,
dans le stade (902) de la lecture, des informations de vitesse de roue sur des vitesses de rotation de roues (800) de l'attelage (100) sont lues et, dans un stade de la détermination, l'information (336) de vitesse est déterminée en utilisant les informations de vitesse de roue.

**9.** Appareil (102) de commande, qui est conçu pour exécuter le procédé (900) suivant l'une des revendications précédentes.

**10.** Programme d'ordinateur qui fait, lors de sa réalisation par un ordinateur, que le procédé (900) suivant l'une des revendications précédentes est exécuté.

FIG 1

FIG 2

FIG 3

FIG 4

FIG 5

FIG 6

704
712
306, 718
714
306, 718
716
306, 718
310
702
700
710
706
306
110
708
102
724
720
308
722

FIG 7

θ
M
V
S
m
S
N
α

FIG 8

FIG 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008022026 A1
- DE 10328028 A1
- DE 102011017018 B3
- DE 102006033351 A1
- EP 0374484 A1